# FASCICULE DE BREVET EUROPEEN

(11) **EP 3 868 029 B1**
(45) Date de publication et mention de la délivrance du brevet: **23.08.2023**
(21) Numéro de dépôt: 19784079.6
(22) Date de dépôt: 14.10.2019
(51) Int. Cl.: H04B 5/00, H04W 12/00, H04W 4/80

(54) **GESTION DE TRANSACTIONS DANS UN DISPOSITIF NFC**
TRANSAKTIONSVERWALTUNG IN EINER NFC-VORRICHTUNG
TRANSACTION MANAGEMENT IN A NFC DEVICE

(30) Priorité: 15.10.2018 FR 1871180
(43) Date de publication de la demande: 25.08.2021
(73) Titulaire: Proton World International N.V., 1831 Diegem (BE)
(72) Inventeur: VAN NIEUWENHUYZE, Olivier, 1970 Wezembeek-Oppem (BE)
(74) Mandataire: Cabinet Beaumont
(86) Numéro de dépôt international: PCT/EP2019/077827
(87) Numéro de publication internationale: WO 2020/078930

(56) Documents cités:
- EP-A1- 2 672 735
- EP-A1- 2 775 739
- WO-A1-2016/076997
- US-A1- 2016 140 537

## Description

### Domaine technique

La présente description concerne de façon générale les dispositifs électroniques et, plus particulièrement, les dispositifs intégrant des circuits de communication en champ proche (NFC - Near Field Communication). La présente description s'applique plus précisément à la gestion de transactions en champ proche entre des éléments du dispositif et l'extérieur.

### Technique antérieure

Les systèmes de communication radiofréquence en champ proche sont de plus en plus fréquents, en particulier depuis le développement des technologies de communication en champ proche selon la norme ISO 14443 ou le NFC forum.

Ces systèmes exploitent un champ électromagnétique radiofréquence émis par un dispositif (terminal ou lecteur) pour communiquer avec un autre dispositif (carte).

Ces communications intègrent diverses transactions entre des éléments internes et externes au dispositif de communication en champ proche. La gestion de ces transactions est rendue complexe par la multiplicité des applications susceptibles d'être hébergées par le dispositif.

Le document EP-A-2775739 décrit un dispositif équipé d'un routeur de communication en champ proche dans lequel l'aiguillage des communications entre l'extérieur du dispositif et des éléments sécurisés du dispositif est effectué par le routeur de même que la décision de sélection de l'élément sécurisé à partir de requêtes applicatives.

Le document EP-A-2672735 décrit un mécanisme de routage d'identification d'application de communication en champ proche en émulation carte.

Le document WO-A-2016076997 décrit un mécanisme de routage pour éléments sécurisés.

Le document US-A-2016140537 décrit des systèmes et procédés de routage adaptatif pour éléments sécurisés multiples.

### Résumé de l'invention

Il existe un besoin d'amélioration des dispositifs de communication en champ proche, notamment en termes de gestion des transactions entre différentes applications hébergées par le dispositif.

Un tel besoin est particulièrement présent pour la gestion d'applications requérant un environnement sécurisé comme, par exemple, la gestion des informations d'un fournisseur de services (les clés et données du fournisseur de services sont généralement protégées par des éléments offrant un haut niveau de sécurité contre les attaques).

Un mode de réalisation vise à réduire tout ou partie des inconvénients des techniques connues de gestion de transactions dans un dispositif de communication en champ proche.

Un mode de réalisation prévoit un procédé de routage de communications en champ proche, dans un dispositif comportant :
- un routeur de communication en champ proche ;
- au moins un élément sécurisé ;
- un module d'interface utilisateur ;
- un circuit hôte (21) distinct du routeur de communication en champ proche et destiné à arbitrer et activer des applications hébergées par ledit élément sécurisé, de sorte à permettre les communications entre ces applications et ledit routeur ; et
- une unité de gestion contenue dans le circuit hôte, dans lequel l'unité de gestion sélectionne un élément sécurisé vers lequel aiguiller une communication.

Selon un mode de réalisation, ladite unité de gestion sélectionne ledit élément sécurisé en fonction de données reçues du module d'interface utilisateur.

Selon un mode de réalisation, ladite unité de gestion sélectionne ledit élément sécurisé à partir d'une analyse de la communication et/ou du champ électromagnétique.

Selon un mode de réalisation, ladite unité de gestion sélectionne ledit élément sécurisé à partir d'informations sur l'environnement telles qu'un positionnement GPS, une information sur le type de transaction par WiFi, ou sur le type de transaction par Bluetooth.

Selon un mode de réalisation, ladite unité de gestion sélectionne ledit élément sécurisé à partir d'une analyse d'une première trame de communication reçue.

Selon un mode de réalisation, ladite unité de gestion sélectionne et/ou active une des applications hébergées par ledit élément sécurisé.

Selon un mode de réalisation, le routeur de communication en champ proche comporte une table de routage configurée au moins par l'unité de gestion.

Selon un mode de réalisation, le routeur comporte une configuration dans laquelle sa table de routage oriente toute requête de sélection d'un environnement sécurisé vers l'unité de gestion.

Selon un mode de réalisation, le routeur comporte une configuration dans laquelle sa table de routage oriente les requêtes de sélection des applications non-actives/non-disponibles hébergées dans un environnement sécurisé vers l'unité de gestion et oriente directement les requêtes de sélection des applications actives/disponibles vers ces applications hébergées dans les éléments sécurisés.

Selon un mode de réalisation, l'unité de gestion (4) active une application non-active/non-disponible pour effectuer une transaction et, en cas de conflit avec une autre application active, désactive cette application active conflictuelle.

Selon un mode de réalisation, le routeur comporte une configuration dans laquelle sa table de routage oriente les requêtes de sélection vers un environnement sécurisé et, si la requête n'est pas à destination de l'élément sécurisé de cet environnement, le routeur envoie la requête à l'unité de gestion.

Selon un mode de réalisation, le routeur comporte une configuration dans laquelle sa table de routage oriente les requêtes de sélection vers un environnement sécurisé et, si la requête n'est pas à destination de l'élément sécurisé de cet environnement, l'élément sécurisé informe l'unité de gestion.

Selon un mode de réalisation, le routeur, une fois configuré par l'unité de gestion, comporte, dans sa table de routage, des paramètres de routage des communications vers l'élément sécurisé sélectionné.

Selon un mode de réalisation, une application utilisateur est associée au module d'interface utilisateur pour interagir avec l'unité de gestion.

Selon un mode de réalisation, chaque élément sécurisé héberge au moins un environnement carte, un ou plusieurs environnements pouvant être sélectionnés par l'unité de gestion.

Selon un mode de réalisation, une communication est initiée par le routeur de communication en champ proche et est poursuivie sur un autre canal de communication radiofréquence.

Un mode de réalisation prévoit un dispositif de communication en champ proche, comportant :
- un routeur de communication en champ proche ;
- plusieurs éléments sécurisés ;
- un module d'interface utilisateur ;
- un circuit hôte (21) distinct du routeur de communication en champ proche et destiné à arbitrer et activer des applications hébergées par ledit élément sécurisé, de sorte à permettre les communications entre ces applications et ledit routeur ; et
- une unité de gestion contenue dans le circuit hôte, dans lequel l'unité de gestion sélectionne un élément sécurisé vers lequel aiguiller une communication.

Selon un mode de réalisation, le dispositif est programmé pour la mise en oeuvre du procédé de routage de communications en champ proche.

Un mode de réalisation prévoit un téléphone mobile, comportant un dispositif de communication en champ proche.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de système de communication en champ proche du type auquel s'appliquent les modes de réalisation décrits ;
la figure 2 représente, de façon très schématique et partielle, différents constituants d'un dispositif de communication en champ proche ;
la figure 3 représente, de façon très schématique et sous forme de blocs, un exemple d'étapes pour effectuer une transaction entre des éléments interne et externe au dispositif par communication en champ proche ; et
la figure 4 représente, de façon très schématique et partielle, un mode de réalisation d'un dispositif de communication en champ proche.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles de communication (techniques de modulation du champ électromagnétique), qu'ils soient sécurisés ou non sécurisés, entre le dispositif et l'extérieur n'ont pas été détaillés, les modes de réalisation décrits étant compatibles avec les techniques usuelles de génération et de modulation de signaux radiofréquences pour communication en champ proche.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

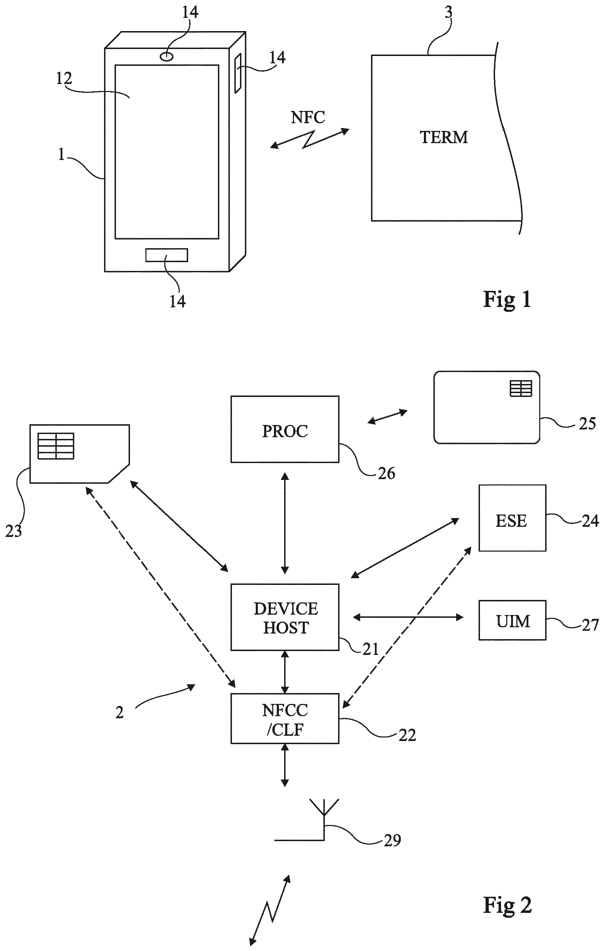

La figure 1 représente, de façon très schématique et sous forme de blocs, un exemple de système de communication en champ proche du type auquel s'appliquent les modes de réalisation décrits.

Des circuits de communication en champ proche se retrouvent notamment dans des dispositifs électroniques communicants, de type téléphone mobile 1. Typiquement, un téléphone mobile, équipé de fonctionnalités NFC, est capable de communiquer non seulement par le réseau de téléphonie sans fil (par exemple GSM) ou selon des protocoles radiofréquences à moyenne portée (par exemple, WiFi, Bluetooth), mais également en champ proche (dit aussi sans contact), du quasi contact à 4-5 centimètres, d'après des normes, par exemple 14443 ou NFC Forum. On fera par la suite référence à un dispositif NFC pour désigner un dispositif intégrant des fonctionnalités de communication sans contact en champ proche.

Le dispositif NFC (téléphone 1 en figure 1) est susceptible de communiquer par couplage électromagnétique en champ proche avec un autre dispositif NFC 3. Cet autre dispositif 3s, par exemple un terminal (TERM), rayonne un champ magnétique destiné à être capté par les circuits NFC du téléphone. On suppose le cas d'un téléphone 1 et d'un terminal 3 (par exemple, un terminal de paiement sans contact), mais tout ce qui va être décrit s'applique plus généralement à tout système dans lequel un transpondeur électromagnétique ou dispositif NFC capte un champ électromagnétique rayonné par un lecteur, borne ou terminal. En d'autres termes, les modes de réalisation s'appliquent à tout système dans lequel deux dispositifs NFC 1 et 3 sont susceptibles de communiquer par couplage électromagnétique en champ proche. Selon les applications, pour une communication, un des dispositifs fonctionne en mode dit lecteur tandis que l'autre fonctionne en mode dit carte, ou les deux dispositifs communiquent en mode poste à poste (peer to peer - P2P). Dans d'autres applications visées par la présente description, la communication est initiée en champ proche mais la transaction elle-même (la suite de la communication) est effectuée par un autre canal, par exemple Bluetooth ou autre canal de transmission sans contact. Chaque dispositif 1, 3, comporte divers circuits électroniques, parmi lesquels un circuit constituant une interface de communication en champ proche, ou interface NFC, entre le dispositif NFC et l'extérieur. Cette interface sert entre autres, en mode lecteur, à générer un signal radiofréquence émis à l'aide d'une antenne et, en mode carte, à décoder un signal radiofréquence capté. Le champ radiofréquence généré par l'un des dispositifs est capté par l'autre dispositif qui se trouve à portée et qui comporte également une antenne.

Dans l'exemple d'un terminal mobile de type smartphone 1, ce dernier comporte au moins un écran 12 ainsi que des éléments 14 (boutons, touches, capteur d'empreinte, zones tactiles d'écran, caméras, etc.) constituant des éléments d'interface utilisateur.

La figure 2 représente, de façon très schématique et partielle, différents constituants d'un dispositif 2 de communication en champ proche. Un tel dispositif peut faire partie du dispositif mobile 1 et du terminal 3 de la figure 1 selon les applications.

Le fonctionnement en champ proche d'un dispositif 2 est basé sur l'utilisation d'un contrôleur NFC ou routeur NFC 22 (NFCC/CLF) associé à une tête d'émission-réception sans contact (CLF - ContactLess Front end). Le routeur 22 communique d'une part avec une antenne 29 d'émission-réception et d'autre part avec un circuit hôte ou processeur hôte 21 (DEVICE HOST) du dispositif 2. Le circuit hôte 21 est susceptible de relayer des communications entre le contrôleur/routeur 22 et différentes applications hébergées par le dispositif 2. On fera par la suite indifféremment référence à un routeur on contrôleur (routeur NFC, routeur CLF, contrôleur NFC, contrôleur NFCC) pour désigner le circuit 22.

Parmi ces applications, certaines sont des applications dites sécurisées (par opposition à des applications non sécurisées) qui font appel à des circuits spécifiques de validation ou de contrôle. Ces applications sécurisées sont alors, en tout ou en partie, hébergées par des circuits spécifiques communément appelés éléments sécurisés (Secure Elements - SE) qui sont pourvus de circuits de traitement et/ou de mémorisation de clé/code/signature/etc. permettant de valider/traiter/authentifier/etc. une opération ou transaction sécurisée. Par exemple, une transaction sécurisée consiste en une opération de paiement (une opération de paiement sans contact), une opération de contrôle d'accès, une opération de déverrouillage d'une application ou d'un périphérique, etc.

Différents éléments sécurisés sont susceptibles de communiquer avec le processeur ou circuit hôte 21 pour effectuer (généralement de façon chiffrée) des transactions NFC. Il s'agit, par exemple :
d'éléments sécurisés amovibles 23, montés dans un lecteur du dispositif 2, par exemple une carte SIM (Secure Identification Module) ;
d'éléments sécurisés intégrés au dispositif 2, par exemple un élément sécurisé embarqué 24 (ESE - Embedded Secure Element) ou intégré (iSE - Integrated/Imbedded Secure Element) ; et/ou
d'éléments sécurisés portés par des éléments 25 externes au dispositif 2 (par exemple des cartes de paiement) et dont les informations transitent par un processeur 26 (PROC) générique (non dédié aux opérations NFC) que contient le dispositif 2 et qui communique avec le circuit 21 et, par ce biais, avec le contrôleur 22.

Le contrôleur 22 contient notamment une table de routage définissant les paramètres et canaux de communication entre la tête d'émission-réception radiofréquence et les éléments du dispositif 2 en fonction de l'application exécutée. Cette table de routage permet au circuit hôte 21 d'aiguiller correctement les communications vers les différents éléments et au contrôleur 22 d'émettre correctement les communications reçues du circuit 21. Dans certains cas, des éléments sécurisés sont capables de communiquer directement avec le contrôleur 22 sans passer par le circuit hôte 21. Ce cas est illustré en figure 1 par des liaisons en pointillés entre le contrôleur 22 et les éléments 23 et 24.

Des modules d'interface utilisateur 27 (UIM) sont également susceptibles de communiquer avec le circuit hôte 21 lorsqu'une interaction avec l'utilisateur est requise. Ces modules sont typiquement des applications (app) dédiées aux différents systèmes susceptibles d'interagir avec le téléphone pour des applications requérant l'implication d'un élément sécurisé. Il s'agit par exemple d'applications de porte-monnaie électronique, d'applications de réservation de titres de transport, d'applications bancaires, etc. Ces modules d'interface utilisateur 27 utilisent l'écran 12 du téléphone et divers dispositifs d'entrée-sortie 14 afin d'interagir avec l'utilisateur.

Bien entendu, d'autres applications peuvent également avoir accès au contrôleur NFCC 22 à des fins de communication en champ proche. Toutefois, les modes de réalisation décrits s'appliquent plus particulièrement à la gestion d'applications sécurisées.

Le développement des applications NFC qui incluent de plus en plus d'applications sécurisées (par exemple, des applications de paiement) engendre des besoins particuliers en termes de gestion des transactions NFC (utilisant des communications NFC). En particulier, de plus en plus d'éléments sécurisés, non portés par des cartes, émulent un fonctionnement de carte sans contact afin de permettre d'utiliser le téléphone 1 à la manière d'une carte sans contact.

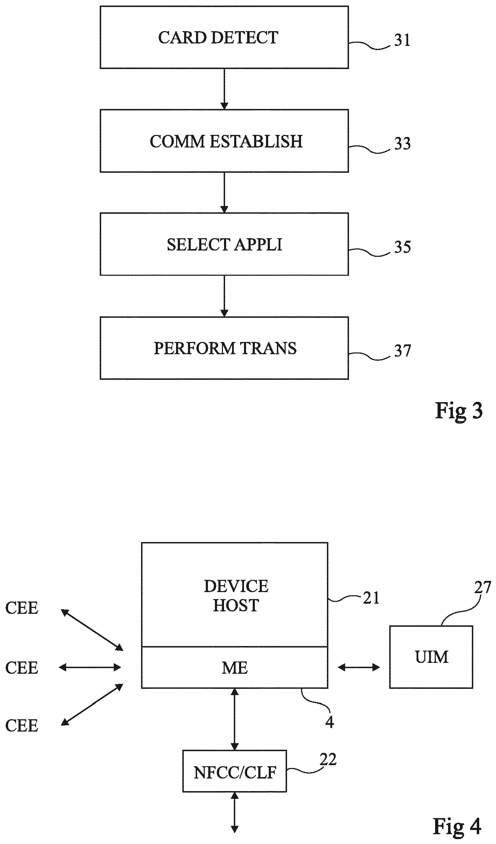

La figure 3 représente, de façon très schématique et sous forme de blocs, un exemple d'étapes pour effectuer une transaction entre des éléments interne et externe au dispositif par communication en champ proche.

Typiquement et de façon simplifiée, une transaction impliquant un élément sécurisé commence par un processus d'établissement d'une communication entre le dispositif 1 (figure 1) opérant en mode carte et un terminal 3.

Le terminal 3 qui fonctionne en mode lecteur émet un champ électromagnétique radiofréquence destiné à être capté par une carte. Un tel champ est émis, selon les systèmes, de façon continue ou selon des trames périodiques jusqu'à ce qu'une carte 1 soit détectée (bloc 31, CARD DETECT). Une fois la carte détectée, un processus d'établissement de communication (bloc 33, COMM ESTABLISH) est mis en oeuvre. Lors de cette étape d'établissement de la communication, des paramètres radiofréquences spécifiques sont attendus par le terminal en fonction de l'application qu'il cible dans le téléphone. Ces paramètres diffèrent généralement en fonction de l'élément sécurisé impliqué dans la transaction à venir. Les paramètres peuvent concerner le type de modulation, le type de codage, des paramètres temporels, fréquentiels, etc.

Lorsque la communication est établie, le terminal envoie au téléphone une requête (bloc 35, SELECT APPLI) de sélection de l'application en fonction de l'opération qu'il souhaite effectuer. Cette requête doit permettre, côté téléphone, de sélectionner l'application et plus particulièrement l'élément sécurisé, avec lequel effectuer ensuite la transaction. Une fois l'application sélectionnée, celle-ci a accès au routeur CLF 22 et la transaction est effectuée (bloc 37, PERFORM TRANS). La transaction est effectuée en utilisant la communication établie.

Le processus décrit ci-dessus est en lui-même usuel pour ce qui est du fonctionnement côté terminal.

Toutefois, côté dispositif opérant en mode carte, la présence de multiples éléments sécurisés engendre des contraintes particulières.

En effet, il peut se produire que plusieurs éléments sécurisés, requérant d'utiliser les paramètres radiofréquences et hébergeant des applications qui sont simultanément disponibles côté terminal, donc du point de vue communication radiofréquence, soient présents. Dans ce cas, le routeur CLF 22 peut se trouver dans une situation où il lui faut déterminer à quel élément sécurisé faire suivre la requête et la transaction qui suit.

Il peut également se produire que plusieurs systèmes d'exploitation (OS) ayant leurs propres applications sans contact (système VPP - Virtual Primary Platform) soient hébergés dans ou compatibles avec un même élément sécurisé intégré (iSE) ou embarqué (ESE) et que l'application VPP active ne soit pas compatible avec celle hébergée par le lecteur.

Une difficulté est que, dans un système usuel, l'utilisateur ne sait pas qu'une action est requise au niveau du routeur CLF 22 afin de permettre la transaction.

La figure 4 représente, de façon très schématique et partielle, un mode de réalisation d'un dispositif de communication en champ proche.

On prévoit d'intercaler, entre le contrôleur NFC / routeur CLF 22 et le circuit hôte 21, une unité de gestion 4 (ME) dont le rôle est de permettre l'aiguillage des requêtes de sélection d'application provenant d'un terminal ainsi que les transactions sécurisées. Cette unité 4 communique (est interfacée) avec les différents éléments (23, 24, 25) émulant un environnement en mode carte sécurisé (CEE). L'unité 4 a également accès aux différents modules d'interface utilisateur 27 (UIM), c'est-à-dire aux applications en charge d'une interaction avec l'utilisateur.

Plus précisément, selon les modes de réalisation décrits, l'unité de gestion 4 fait partie du circuit hôte 21.

On aurait pu penser associer l'unité de gestion au contrôleur NFC 22. Toutefois, le contrôleur NFC ou routeur 22 ne connaît pas la configuration du système. Par conséquent, il ne disposerait pas des éléments permettant d'orienter correctement les requêtes de sélection provenant d'un terminal sécurisé ainsi que les transactions.

Les modes de réalisation décrits tirent profit du fait que, dans la plupart des applications sécurisées (de paiement, d'authentification, etc.), une intervention de l'utilisateur est requise. Une telle intervention correspond par exemple à la validation d'un paiement en cours de transaction avec un terminal de paiement, une acceptation d'un prélèvement, etc.

Ainsi, il n'est pas gênant ni contraignant de faire appel à l'utilisateur pour valider celui des éléments sécurisés, ou plus généralement celui des environnements d'émulation carte (un même élément sécurisé pouvant comprendre plusieurs environnements), qui doit être sélectionné pour la transaction. De surcroît, de telles applications étant généralement considérées comme sensibles du point de vue de l'accès à des données privées, une telle sélection par l'utilisateur sera bien perçue. L'interaction entre les interfaces utilisateur 27 et le dispositif transitant par le circuit hôte 21, il est avantageux de prévoir l'unité de gestion 4 dans ce circuit hôte 21.

L'unité de gestion 4 connaît (contient des paramètres et identifiants) toutes les applications installées via tous les éléments sécurisés contenus dans le mobile. Pour cela, toute application hébergée dans un quelconque élément sécurisé du dispositif 2 s'enregistre (par exemple dans une phase d'initialisation du dispositif 2 ou lors du lancement de l'application concernée) auprès de l'unité 4. Ainsi, l'unité 4 connaît, à tout moment, l'état actif ou non de chaque application. Il est donc là encore avantageux que l'unité de gestion soit contenue dans le circuit hôte 21.

Lorsqu'un même élément sécurisé héberge plusieurs applications, c'est-à-dire plusieurs environnements d'émulation carte, l'unité de gestion 4 peut (via une commande de l'utilisateur) soit combiner les paramètres radiofréquences selon des règles associées aux différentes applications hébergées, soit sélectionner un seul environnement.

Le routage en lui-même des requêtes et des transactions exploite les éléments usuels d'un routeur CLF. En particulier, un tel routeur 22 comporte généralement une table de routage lui permettant d'aiguiller les communications vers les éléments (sécurisé ou non sécurisé) appropriés du téléphone. L'intervention de l'unité de gestion 4 consiste alors à configurer le contrôleur NFCC 22, donc modifier sa table de routage afin de lui permettre d'aiguiller correctement les transactions.

De préférence, toute communication et transaction transite par l'unité de gestion 4 qui effectue directement l'aiguillage vers les éléments sécurisés, la table de routage du routeur aiguillant toute communication et transaction sécurisée vers l'arbitre du module de gestion.

En d'autres termes, le circuit hôte arbitre et active des applications hébergées par ledit élément sécurisé, de sorte à permettre les communications entre ces applications et ledit routeur et l'élément sécurité vers lequel aiguiller une communication est sélectionné par l'unité de gestion contenue dans le circuit hôte.

Le fonctionnement du système est le suivant. L'unité de gestion 4 programme le routeur 22 (sa table de routage) afin que, lorsqu'une commande de sélection provenant d'un terminal appelle une application sécurisée qui n'est pas disponible dans le contrôleur 22 (par exemple, une application sécurisée qui n'est pas active), cette commande soit redirigée vers un circuit ou une fonction d'arbitrage ou de sélection contenue dans l'unité de gestion 4. La fonction d'arbitrage est configurée (programmée) pour que lorsque « l'Arbitre » reçoit une commande de sélection, soit il sélectionne l'environnement carte approprié, soit il propose à l'utilisateur de sélectionner l'environnement qu'il souhaite.

De préférence, une fois la sélection effectuée, celle-ci est programmée dans la table de routage du routeur 22 de façon à gagner du temps lors des transactions ultérieures. Cette programmation subsiste (c'est-à-dire que l'Arbitre est inactif) tant que l'utilisateur n'effectue pas une intervention volontaire ou que l'environnement en termes d'éléments sécurisés n'est pas modifié (ajout, suppression d'un élément sécurisé par exemple).

De préférence, lorsque le téléphone mobile (le routeur CLF) détecte un appel à un environnement sécurisé, seules les applications sécurisées sont actives et les autres applications hébergées par le téléphone sont désactivées, à l'exception d'une application spécifique associée à l'unité de gestion pour permettre à l'utilisateur de sélectionner l'élément sécurisé qu'il souhaite associer à la requête.

La sélection par l'utilisateur fait donc appel, de préférence, à une application spécifique, associée à l'unité de gestion 4. Une telle application est, par exemple, lancée automatiquement par l'unité de gestion 4 à réception d'une requête de sélection qu'il reçoit du routeur 22 et à tout moment sous commande de l'utilisateur.

La détection, par l'unité de gestion 4, de la nature et du type de transaction, pour lui permettre de sélectionner l'élément sécurisé ou l'application/environnement d'un élément sécurisé vers lequel aiguiller la communication, peut prendre différentes formes. Selon un mode de réalisation, l'unité de gestion 4 sélectionne l'élément sécurisé et/ou un environnement et/ou une application dans celui-ci à partir d'une analyse de la communication et/ou du champ électromagnétique (par exemple l'intensité du champ, le type de requêtes d'interrogation (polling), les pauses entre les requêtes, le processus d'anticollision utilisé, la gestion d'erreurs dans le processus d'anticollision, etc.). Selon un autre exemple, l'unité de gestion reçoit une information de l'utilisateur, via le module d'interface 27, lui permettant d'identifier l'élément sécurisé et/ou l'environnement/application. Selon encore un autre exemple, l'unité de gestion 4 analyse la première trame reçue du lecteur pour identifier l'élément sécurisé et/ou l'environnement ou l'application concerné. Ces modes de détection sont bien entendu combinables. Dans tous les cas, on peut prévoir que tout changement de configuration à la suite de cette détection soit conditionné par une confirmation par l'utilisateur, via le module d'interface utilisateur 27.

A titre d'exemple particulier de réalisation, on peut mentionner les situations suivantes.

On suppose le cas d'un système comportant une puce sécurisée qui implémente un système de gestion de plusieurs systèmes d'exploitation (OS) avec la limitation qu'un seul système d'exploitation à la fois peut exploiter les ressources du processeur 26 (figure 1). Par conséquent, s'il faut activer un autre système d'exploitation, il faut « décharger » le premier pour (re)charger le deuxième (technologie décrite comme VPP). Si le système d'exploitation qui est actif au moment de la transaction NFC héberge une application de paiement mais que l'application visée par la transaction NFC se trouve dans le deuxième système d'exploitation contenu dans un élément sécurisé qui n'est pas actif au moment de la transaction, le routeur CLF 22 transmet la requête à l'unité de gestion 4 qui, lorsqu'elle détectera la requête, reconfigurera l'élément sécurisé pour que le deuxième système d'exploitation soit disponible dans la nouvelle transaction. L'unité de gestion 4 prend en charge (ou fait effectuer) la reconfiguration de la table de routage du contrôleur NFCC pour que la transaction suivante soit envoyée à l'élément sécurisé qui héberge le deuxième système d'exploitation.

Selon un autre exemple, on suppose un système hébergeant plusieurs éléments sécurisés qui ne travaillent pas en mode collaboratif (Managing Entity - legacy). L'unité de gestion 4 intercepte alors le début de la transmission pour reconfigurer le routeur CLF afin que la prochaine transmission atteigne l'élément sécurisé qui héberge l'application visée par la transaction. Par exemple, un élément sécurisé embarqué (eSE) 24 héberge une application de paiement et un module d'identification sécurisé (SIM) 23 héberge une application de transit. En supposant que, dans la configuration courante, le contrôleur NFCC envoie les transactions de paiement à l'élément sécurisé embarqué 24 et les transactions de transit à l'unité de gestion 4, si le lecteur sans contact démarre une transaction de transit, cette transaction sera envoyée à l'unité de gestion qui va reconfigurer les tables de routage du contrôleur NFCC (et les autres paramètres si besoin) pour que la prochaine transaction soit envoyée vers le module d'identification sécurisé (SIM) 23 et que les transactions de paiement soient envoyées vers l'unité de gestion 4.

Dans les deux exemples ci-dessus, l'unité de gestion 4 pourrait demander à l'utilisateur une confirmation pour la reconfiguration.

Par ailleurs, dans ces deux exemples, l'unité de gestion 4 détecte le type de transaction grâce aux débuts de trame envoyés. D'autres méthodes peuvent également être utilisées pour détecter le type de transaction (par exemple, l'analyse du champ du lecteur, l'analyse du type de polling, de l'anticollision, etc.). On pourrait également utiliser d'autres moyens tels que le GPS (par exemple, dans le métro, l'unité de gestion sélectionnerait l'application de transit) ou une identification du type de transaction sur un autre canal (par exemple, un signal Bluetooth ou WiFi indiquerait le type de transaction dans un magasin).

D'autres réalisations sont bien entendu possibles.

Un avantage des modes de réalisation décrits est qu'ils ne requièrent pas de modifier les applications elles-mêmes. En effet, l'unité de gestion gère d'elle-même l'appel à l'application/interface utilisateur qui permet d'aiguiller correctement la requête de sélection provenant du terminal ainsi que la transaction qui suit.

Un avantage des modes de réalisation décrits est qu'ils ne requièrent aucune modification côté terminal. Ainsi, des dispositifs carte 1 réalisés selon les modes de réalisation décrits sont compatibles avec les terminaux existants.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. Par exemple, on peut prévoir qu'une communication soit initiée par le routeur de communication en champ proche 22 et que la communication soit ensuite poursuivie (c'est-à-dire que la transaction elle-même, de paiement par exemple, soit effectuée) sur un autre canal de communication radiofréquence, par exemple WiFi, Bluetooth, etc.

Enfin, la mise en oeuvre pratique des modes de réalisation et variantes décrits est à la portée de l'homme du métier à partir des indications fonctionnelles données ci-dessus. En particulier, la réalisation matérielle et logicielle de l'unité de gestion est à la portée de l'homme du métier en fonction de l'application et des indications fonctionnelles données.

## Revendications

1. Procédé de routage de communications en champ proche, dans un dispositif comportant :
- un routeur de communication en champ proche (22) ;
- au moins un élément sécurisé (23, 24, 25) ;
- un module d'interface utilisateur (27) ;
- un circuit hôte (21) distinct du routeur de communication en champ proche, le circuit hôte arbitrant et activant des applications hébergées par ledit élément sécurisé, de sorte à permettre les communications entre ces applications et ledit routeur ; et
- une unité de gestion (4) contenue dans le circuit hôte, dans lequel l'unité de gestion sélectionne un élément sécurisé vers lequel aiguiller une communication.

2. Procédé selon la revendication 1, dans lequel ladite unité de gestion (4) sélectionne ledit élément sécurisé (23, 24, 25) en fonction de données reçues du module d'interface utilisateur (27).

3. Procédé selon la revendication 1 ou 2, dans lequel ladite unité de gestion (4) sélectionne ledit élément sécurisé (23, 24, 25) à partir d'une analyse de la communication et/ou du champ électromagnétique.

4. Procédé selon l'une quelconque des revendications 1 à 3, dans lequel ladite unité de gestion (4) sélectionne ledit élément sécurisé (23, 24, 25) à partir d'informations sur l'environnement telles qu'un positionnement GPS, une information sur le type de transaction par WiFi, ou sur le type de transaction par Bluetooth.

5. Procédé selon l'une quelconque des revendications 1 à 4, dans lequel ladite unité de gestion (4) sélectionne ledit élément sécurisé (23, 24, 25) à partir d'une analyse d'une première trame de communication reçue.

6. Procédé selon l'une quelconque des revendications 1 à 5, dans lequel ladite unité de gestion sélectionne et/ou active une des applications hébergées par ledit élément sécurisé.

7. Procédé selon l'une quelconque des revendications 1 à 6, dans lequel le routeur de communication en champ proche (22) comporte une table de routage configurée au moins par l'unité de gestion (4).

8. Procédé selon la revendication 7, dans lequel le routeur (22) comporte une configuration dans laquelle sa table de routage oriente toute requête de sélection d'un environnement sécurisé vers l'unité de gestion (4).

9. Procédé selon la revendication 7 ou 8, dans lequel le routeur (22) comporte une configuration dans laquelle sa table de routage oriente les requêtes de sélection des applications non-actives/non-disponibles hébergées dans un environnement sécurisé vers l'unité de gestion (4) et oriente directement les requêtes de sélection des applications actives/disponibles vers ces applications actives hébergées dans les éléments sécurisés.

10. Procédé selon l'une quelconque des revendications 7 à 9, dans lequel l'unité de gestion (4) active une application non-active/non-disponible pour effectuer une transaction et, en cas de conflit avec une autre application active, désactive cette application active conflictuelle.

11. Procédé selon l'une quelconque des revendications 7 à 10, dans lequel le routeur (22) comporte une configuration dans laquelle sa table de routage oriente les requêtes de sélection vers un environnement sécurisé et, si la requête n'est pas à destination de l'élément sécurisé de cet environnement, le routeur (22) envoie la requête à l'unité de gestion (4).

12. Procédé selon l'une quelconque des revendications 7 à 10, dans lequel le routeur (22) comporte une configuration dans laquelle sa table de routage oriente les requêtes de sélection vers un environnement sécurisé et, si la requête n'est pas à destination de l'élément sécurisé de cet environnement, l'élément sécurisé informe l'unité de gestion (4).

13. Procédé selon l'une quelconque des revendications 7 à 12, dans lequel le routeur (22), une fois configuré par l'unité de gestion (4), comporte, dans sa table de routage, des paramètres de routage des communications vers l'élément sécurisé sélectionné.

14. Procédé selon l'une quelconque des revendications 1 à 13, dans lequel une application utilisateur est associée au module d'interface utilisateur (27) pour interagir avec l'unité de gestion (4).

15. Procédé selon l'une quelconque des revendications 1 à 14, dans lequel chaque élément sécurisé (23, 24, 25) héberge au moins un environnement carte (CEE), un ou plusieurs environnements pouvant être sélectionnés par l'unité de gestion (4).

16. Procédé selon l'une quelconque des revendications 1 à 15, dans lequel une communication est initiée par le routeur de communication en champ proche (22) et est poursuivie sur un autre canal de communication radiofréquence.

17. Dispositif de communication en champ proche, comportant :
- un routeur de communication en champ proche (22) ;
- plusieurs éléments sécurisés (23, 24, 25) ;
- un module d'interface utilisateur (27) ;
- un circuit hôte (21) distinct du routeur de communication en champ proche et destiné à arbitrer et activer des applications hébergées par ledit élément sécurisé, de sorte à permettre les communications entre ces applications et ledit routeur ; et
- une unité de gestion (4) contenue dans le circuit hôte, dans lequel l'unité de gestion est adaptée pour sélectionner un élément sécurisé vers lequel aiguiller une communication.

18. Dispositif selon la revendication 17, adapté pour la mise en oeuvre du procédé selon l'une quelconque des revendications 2 à 16.

19. Téléphone mobile (1), comportant un dispositif selon la revendication 17 ou 18.

## Patentansprüche

1. Ein Verfahren zum Weiterleiten bzw. Routing von Nahfeld-Kommunikationen, in einer Vorrichtung, wobei die Vorrichtung Folgendes enthält:
- einen Nahfeld-Kommunikations-Router (22);
- mindestens ein sicheres Element (23, 24, 25);
- ein Benutzerschnittstellenmodul (27);
- eine Host-Schaltung (21), die sich von dem Nahfeld-Kommunikations-Router unterscheidet, wobei die Host-Schaltung Anwendungen, die von dem sicheren Element gehostet werden, vermittelt und aktiviert, um die Kommunikation zwischen diesen Anwendungen und dem Router zu ermöglichen; und
- eine Verwaltungseinheit (4), die in der Host-Schaltung enthalten ist, wobei die Verwaltungseinheit ein sicheres Element auswählt, an das eine Kommunikation gerichtet werden soll.

2. Verfahren nach Anspruch 1, wobei die Verwaltungseinheit (4) das sichere Element (23, 24, 25) entsprechend Daten auswählt, die von dem Benutzerschnittstellenmodul (27) empfangen werden.

3. Verfahren nach Anspruch 1 oder 2, wobei die Verwaltungseinheit (4) das sichere Element (23, 24, 25) basierend auf einer Analyse der Kommunikation und/oder des elektromagnetischen Feldes auswählt.

4. Verfahren nach einem der Ansprüche 1 bis 3, wobei die Verwaltungseinheit (4) das sichere Element (23, 24, 25) auswählt basierend auf Information relativ zur Umgebung, wie z.B. GPS-Positionierung, Information über die Art der Transaktion per WiFi oder über die Art der Transaktion per Bluetooth.

5. Verfahren nach einem der Ansprüche 1 bis 4, wobei die Verwaltungseinheit (4) das sichere Element (23, 24, 25) auswählt basierend auf einer Analyse eines ersten empfangenen Kommunikationsrahmens.

6. Verfahren nach einem der Ansprüche 1 bis 5, wobei die Verwaltungseinheit eine der Anwendungen auswählt und/oder aktiviert, die von dem sicheren Element gehostet werden.

7. Verfahren nach einem der Ansprüche 1 bis 6, wobei der Nahfeld-Kommunikations-Router (22) eine Routing-Tabelle enthält, die zumindest von der Verwaltungseinheit (4) konfiguriert wird.

8. Verfahren nach Anspruch 7, wobei der Router (22) eine Konfiguration enthält, in der seine Routing-Tabelle jede Anfrage zur Auswahl einer sicheren Umgebung an die Verwaltungseinheit (4) leitet.

9. Verfahren nach Anspruch 7 oder 8, wobei der Router (22) eine Konfiguration enthält, in der seine Routing-Tabelle die Anfragen zum Auswählen der nicht aktiven/nicht verfügbaren Anwendungen, die in einer sicheren Umgebung gehostet werden, an die Verwaltungseinheit (4) richtet, und die Anfragen zum Auswählen der aktiven/verfügbaren Anwendungen direkt an diese aktiven Anwendungen richtet, die in den sicheren Elementen gehostet werden.

10. Verfahren nach einem der Ansprüche 7 bis 9, wobei die Verwaltungseinheit (4) eine nicht aktive/unverfügbare Anwendung aktiviert, um eine Transaktion durchzuführen, und im Falle eines Konflikts mit einer anderen aktiven Anwendung diese konfliktbehaftete aktive Anwendung deaktiviert.

11. Verfahren nach einem der Ansprüche 7 bis 10, bei dem der Router (22) eine Konfiguration enthält, in der seine Routing-Tabelle die Anfragen zum Auswählen an eine sichere Umgebung leitet, und wobei, wenn die Anfrage nicht für das sichere Element dieser Umgebung bestimmt ist, der Router (22) die Anfrage an die Verwaltungseinheit (4) sendet.

12. Verfahren nach einem der Ansprüche 7 bis 10, wobei der Router (22) eine Konfiguration enthält, in der seine Routing-Tabelle die Anfragen zum Auswählen an eine sichere Umgebung leitet, und wobei, wenn die Anfrage nicht für das sichere Element dieser Umgebung bestimmt ist, das sichere Element die Verwaltungseinheit (4) informiert.

13. Verfahren nach einem der Ansprüche 7 bis 12, wobei der Router (22), sobald er von der Verwaltungseinheit (4) konfigriert ist, Parameter zum Routing der Kommunikation an das ausgewählte sichere Element enthält und zwar in seiner Routing-Tabelle.

14. Verfahren nach einem der Ansprüche 1 bis 13, wobei eine Benutzeranwendung mit dem Benutzerschnittstellenmodul (27) verknüpft ist, um mit der Verwaltungseinheit (4) zu interagieren.

15. Verfahren nach einem der Ansprüche 1 bis 14, wobei jedes sichere Element (23, 24, 25) mindestens eine Kartenumgebung (CEE) hostet, wobei eine oder mehrere Umgebungen durch die Verwaltungseinheit (4) ausgewählt werden können.

16. Verfahren nach einem der Ansprüche 1 bis 15, wobei eine Kommunikation durch den Nahfeld-Kommunikations-Router (22) initiiert wird und über einen anderen Funkfrequenz-Kommunikationskanal fortgesetzt wird.

17. Eine Nahfeld-Kommunikationsvorrichtung, die Folgendes beinhaltet:
- einen Nahfeld-Kommunikations-Router (22);
- mehrere sichere Elemente (23, 24, 25);
- ein Benutzerschnittstellenmodul (27);
- eine Host-Schaltung (21), die sich von dem Nahfeld-Kommunikations-Router unterscheidet und dazu bestimmt ist, Anwendungen zu vermitteln und zu aktivieren, die von dem sicheren Element gehostet werden, um so die Kommunikation zwischen diesen Anwendungen und dem Router zu ermöglichen; und
- eine Verwaltungseinheit (4), die in der Host-Schaltung enthalten ist, wobei die Verwaltungseinheit eingerichtet ist, um ein sicheres Element auszuwählen, an das eine Kommunikation geleitet werden soll.

18. Vorrichtung nach Anspruch 17, eingerichtet zur Durchführung des Verfahrens nach einem der Ansprüche 2 bis 16.

19. Mobiltelefon (1), das eine Vorrichtung nach Anspruch 17 oder 18 aufweist.

## Claims

1. Method for routing near-field communications, in a device including:
- a near field communication router (22);
- at least one secure element (23, 24, 25);
- an user interface module (27);
- a host circuit (21) distinct from the near-field communication router, the host circuit arbitrating and activating applications hosted by said secure element, so as to allow communications between these applications and said router; and
- a management unit (4) included in the host circuit, wherein the management unit selects a secure element towards which to direct a communication.

2. Method according to claim 1, wherein said management unit (4) selects said secure element (23, 24, 25) according to data received from the user interface module (27).

3. Method according to claim 1 or 2, wherein said management unit (4) selects said secure element (23, 24, 25) based on an analysis of the communication and/or of the electromagnetic field.

4. Method according to any one of claims 1 to 3, wherein said management unit (4) selects said secure element (23, 24, 25) based on information relative to the environment such as GPS positioning, information on the type of transaction by WiFi, or relative to the type of transaction by Bluetooth.

5. Method according to any one of claims 1 to 4, wherein said management unit (4) selects said secure element (23, 24, 25) based on an analysis of a first received communication frame.

6. Method according to any one of claims 1 to 5, wherein said management unit selects and/or activates one of the applications hosted by said secure element.

7. Method according to any one of claims 1 to 6, wherein the near field communication router (22) includes a routing table configured at least by the management unit (4).

8. Method according to claim 7, wherein the router (22) includes a configuration in which its routing table directs any request for selecting a secure environment towards the management unit (4).

9. Method according to claim 7 or 8, wherein the router (22) includes a configuration in which its routing table directs the requests for selecting the non-active/unavailable applications hosted in a secure environment towards the management unit (4), and directly directs the requests for selecting the active/available applications towards these active applications hosted in the secure elements.

10. Method according to any one of claims 7 to 9, wherein the management unit (4) activates a non-active/unavailable application to perform a transaction, and, in case of a conflict with another active application, deactivates this conflicting active application.

11. Method according to any one of claims 7 to 10, wherein the router (22) includes a configuration in which its routing table directs the selecting requests towards a secure environment, and, if the request is not intended for the secure element of this environment, the router (22) sends the request to the management unit (4).

12. Method according to any one of claims 7 to 10, wherein the router (22) includes a configuration in which its routing table directs the selecting requests towards a secure environment, and, if the request is not intended for the secure element of this environment, the secure element informs the management unit (4).

13. Method according to any one of claims 7 to 12, wherein the router (22), once configured by the management unit (4), includes, in its routing table, parameters for routing communications towards the selected secure element.

14. Method according to any one of claims 1 to 13, wherein an user application is associated with the user interface module (27) to interact with the management unit (4).

15. Method according to any one of claims 1 to 14, wherein each secure element (23, 24, 25) hosts at least one card environment (CEE), one or more environments being selectable by the management unit (4).

16. Method according to any one of claims 1 to 15, wherein a communication is initiated by the near field communication router (22), and is continued over another radio frequency communication channel.

17. Near-field communication device, including:
- a near field communication router (22);
- several secure elements (23, 24, 25);
- an user interface module (27);
- a host circuit (21) distinct from the near-field communication router, and intended to arbitrate and activate applications hosted by said secure element, so as to allow communications between these applications and said router; and
- a management unit (4) contained in the host circuit, wherein the management unit is adapted to select a secure element towards which to direct a communication.

18. Device according to claim 17, adapted to implement the method according to any one of claims 2 to 16.

19. Mobile telephone (1), including a device according to claim 17 or 18.
